Europäisches Patentamt

European Patent Office

Office européen des brevets

(19)

(11) Veröffentlichungsnummer : **0 119 398**
**B1**

(12) # EUROPÄISCHE PATENTSCHRIFT

(45) Veröffentlichungstag der Patentschrift :
06.05.87

(21) Anmeldenummer : 84100572.1

(22) Anmeldetag : 20.01.84

(51) Int. Cl.⁴ : **B 63 B   3/00**, B 63 B   5/08

(54) Hohlkörper, insbesondere Schiffskörper.

(30) Priorität : 24.01.83 AT 218/83

(43) Veröffentlichungstag der Anmeldung :
26.09.84 Patentblatt 84/39

(45) Bekanntmachung des Hinweises auf die Patenterteilung : 06.05.87 Patentblatt 87/19

(84) Benannte Vertragsstaaten :
DE FR GB IT NL SE

(56) Entgegenhaltungen :
EP-A- 0 049 871
WO-A-82 /003 13
DE-A- 2 031 718
GB-A- 1 082 982
US-A- 2 322 160
US-A- 3 172 419

(73) Patentinhaber : Austria Metall Aktiengesellschaft
A-5282 Braunau am Inn (AT)

Eder, Theodor Dipl.-Ing.
Herzogbergstrasse 149
AT-2380 Perchtoldsdorf (AT)

(72) Erfinder : Eder, Theodor, Dipl.-Ing.
Herzogbergstrasse 149
A-2380 Perchtoldsdorf (AT)
Erfinder : Koser, Jaroslav, Dipl.-Ing.
Klosterstrasse 12
A-5282 Ranshofen (AT)

(74) Vertreter : Hain, Leonhard, Dipl.-Ing.
Tal 18/IV
D-8000 München 2 (DE)

## Beschreibung

Die Erfindung betrifft einen Hohlkörper, insbesondere einen Schiffskörper, gemäß dem Oberbegriff des Patentanspruches 1.

Bei einer Schiffskonstruktion dieser Art (EP-A-0 049 871) ist es bekannt, die vorzugsweise aus einer Aluminiumlegierung bestehenden Längsprofile plankenartig zusammenzusetzen, nachdem sie entsprechend der Rumpfform des Schiffskörpers vorgebogen und gesäbelt worden sind. An ihren Längsrändern weisen sie nach innen abstehende Schenkel oder Flansche auf, die mittels einer Verschraubung oder Nut-Feder-Verbindung, gegebenenfalls unter Verwendung eines Dichtungsmittels, miteinander dicht verbunden sind. Dabei weisen bekannte Längsprofile an einem Rand einen am Profilsteg angesetzten abgewinkelten Flansch auf und der Steg endet mit einer Kopfrippe. Am anderen Profilrand sind eine der Kopfrippe angepaßte Kehle und ebenfalls ein Flansch ausgebildet, so daß benachbarte Längsprofile über Rippe und Kehle in Verbindung treten und die aneinanderliegenden Flansche miteinander verschraubbar sind. Da die Kontaktflächen der beiden Flansche kreiszylindrische Form mit einem Mittelpunkt im Rippen-Drehpunkt aufweisen, können die Längsprofile verschiedene Winkelstellungen zueinander einnehmen. Diese bekannten Längsprofile werden ausschließlich durch die in die Flansche eingesetzten Schrauben zusammengehalten. Bei großen Zugkräften auf die Längsprofile und infolge des Abstandes der Schrauben kann es daher zu Verformungen der Flansche oder sogar zu einem Ausreißen der Schrauben kommen. In diesen Fällen ist aber die Wasserdichtheit und erforderliche Stabilität des Schiffskörpers nicht mehr gewährleistet. Bei einem anderen bekannten Schiffskörper (WO-A-82/00 313) sind die Längsprofile an ihren Längsrändern zu hakenförmigen Fortsätzen ausgebildet, die ineinandergreifen und mittels eigener Klammern zusammengehalten werden. Diese nur in Abständen angeordneten Klammern bilden auch nur an der Stelle ihrer Anbringung eine unnachgiebige Verbindung, während zwischen den Klammern, wie bei der vorerwähnten Verschraubung, leicht Verformungen auftreten können. Diese bekannte Verklammerung ist außerdem aufwendig und kompliziert, da die Klammern in der Regel zusätzlich verkeilt werden müssen.

Der Erfindung liegt daher die Aufgabe zugrunde, einen Hohlkörper, insbesondere Schiffskörper zu schaffen, dessen Längsprofile auch gegenüber hohen Zugkräften widerstandsfähig miteinander verbunden sind und die sich besonders einfach und leicht zu einer Schiffswandkonstruktion zusammenbauen lassen.

Diese Aufgabe wird an einem Hohlkörper gemäß dem Oberbegriff des Patentanspruches 1 durch die Kennzeichnungsmerkmale dieses Patentanspruches gelöst.

Vorteilhafte Weiterentwicklungen der Erfindung sind in Unteransprüchen beansprucht.

Durch die erfindungsgemäß sich hinterhakenden Rand-Fortsätze stehen die Längsprofile auf ihrer ganzen Länge miteinander in Verbindung, so daß auch eventuell angreifende Zugkräfte auf die ganze Randlänge der Längsprofile verteilt werden. Diese Zugfestigkeit wird zusätzlich noch durch die sich entgegen der Zugrichtung übergreifenden Flansche verstärkt. Die stellenweise anzubringende Verschraubung hat dabei nur die Aufgabe, die Hakenverbindung der Längsprofile in Stellung zu halten und ihr Ausklinken zu verhindern. Die Schrauben selbst sind also nicht mehr auf Zug beansprucht. Auch bei starker Kräfteeinwirkung auf eine solche Hohlkörperwand werden die Profilränder in dichtem Kontaktschluß bleiben und die Gefahr einer Deformierung und ein Undichtwerden der Längsprofilverbindungen beseitigen.

Die Erfindung wird nachfolgend anhand eines Ausführungsbeispieles, das auch in der Zeichnung schematisiert dargestellt ist, näher beschrieben. Es zeigen :

Figur 1   einen Schnitt durch zwei miteinander verbundene Längsprofile,

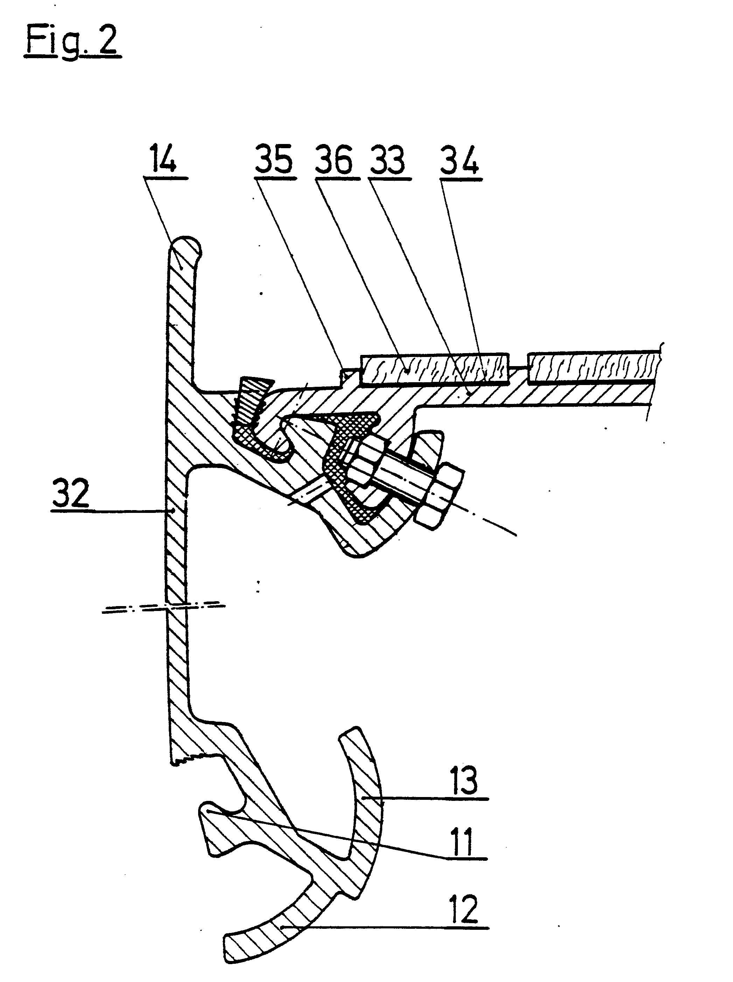

Figur 2   einen Schnitt durch einen Deckanschluß,

Figur 3   einen Schnitt durch die Verbindung mit einem Querspant,

Figur 4   einen vergrößerten Schnitt der Verbindung der Längsprofile in verschiedenen Winkellagen,

Figur 5   einen Schnitt durch einen alternativen Deckanschluß zu Fig. 2,

Figur 6   einen Querschnitt durch einen ganzen Schiffskörper,

Figur 7   einen perspektivischen Ausschnitt eines Schiffsrumpfes mit einer Bodenverstärkung und

Figur 8   eine Ansicht zur Demonstration des Verfahrensmäßigen Aufbaus des Schiffskörpers.

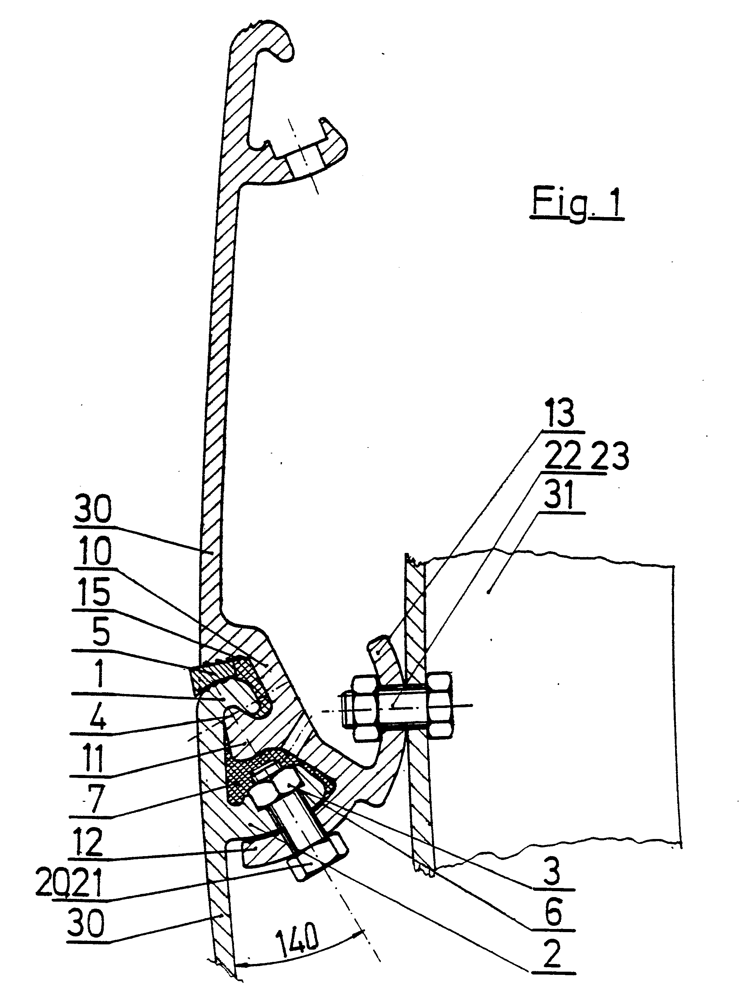

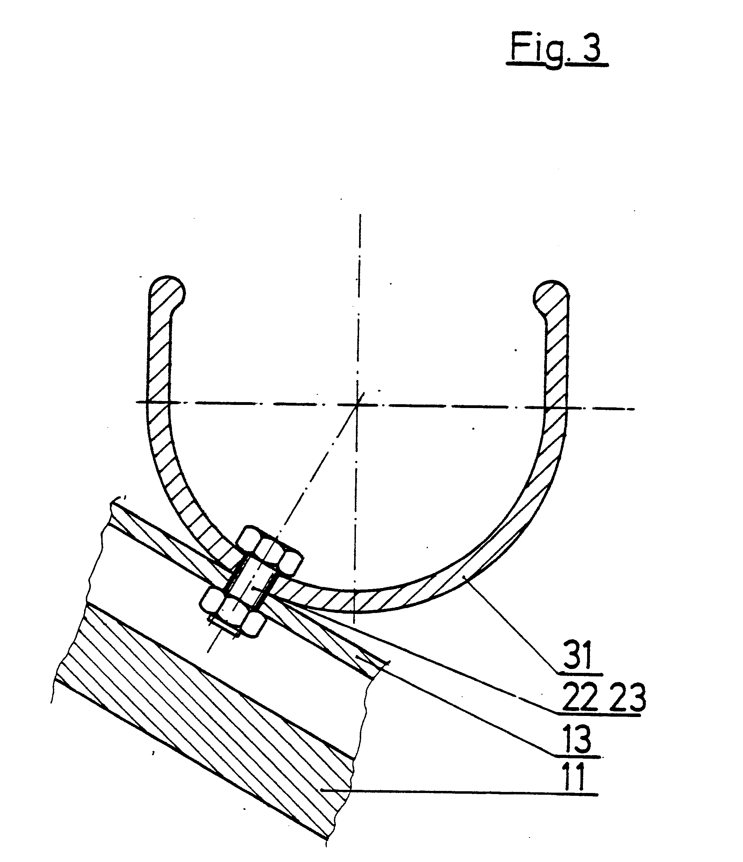

Gemäß der Fig. 1 besteht eine Schiffswand aus plankenartig nebeneinander angeordneten Aluminium-Strangpreß-Längsprofilen 30 mit gewölbten Stegen, die der größten Schiffsbauchkrümmung entsprechen und die an ihren Rändern hakenförmige Kopf- bzw. Fuß-Fortsätze 1 bzw. 11 aufweisen, die verschwenkbar in einem Winkel bis zu 15° ineinandergreifen und miteinander durch Schrauben 20, 21 fixiert sind. Diese Schrauben durchsetzen kreisförmige Kopf- bzw. Fuß-Flansche 2 bzw. 12, die sich hinter den hakenförmigen Fortsätzen 1, 11 befinden und denselben Kreismittelpunkt 4 aufweisen, um den sich die hakenförmige Verbindung verschwenken kann. Es ist somit in jeder Winkellage ein einwandfreies Aneinanderliegen der Flansche 2, 12 gewährleistet. Die Wölbung der Stege kann an Stellen geringer Schiffskörperkrümmung durch Pressen beim Verformen entsprechend vermindert werden. Zur wasserdichten Verbindung kann zwischen diesen Flanschen 2, 12 noch ein Dichtungsstreifen 6 eingelegt sein. Zur Befestigung und Verdrehsicherung der Muttern 3 sind diese in einer auf der Innenseite des Kopf-Flansches 2 angeordneten Nut eingelegt und an den entsprechenden Stellen unterhalb der vorgebohrten Löcher etwa durch Klebung fixiert. Die Verschraubung erfolgt nach dem Einhängen der Längsprofile und der Einstellung der Winkellage 140 nach Durchbohren des Fuß-Flansches 12 und Einstecken der Schrauben. Durch den großen Abstand der Schrauben vom hakenförmigen Drehmittelpunkt ergibt sich eine große Drehsteifigkeit. Zur Verbindung der Längsprofile 30 mit den Querspanten 31 dienen ebenfalls kreisförmig um den Drehpunkt 4 gebogene Flansche 13, welche sich in Verlängerung der Fuß-Flansche 12 bzw. des Steges 10 befinden und mittels Schrauben 22, 23 mit den Querspanten 31 verbunden sind. Um eine Verbindung in den verschiedenen vorkommenden Winkellagen zu gewährleisten, sind die Querspanten 31 mit kreisförmig gebogenem Steg ausgeführt und an den Schenkelenden verstärkt (Fig. 3), an denen auch nicht gezeigte Querschoten angeschlossen sein können. Nach Herstellung der Verschraubung wird der Raum 7 zwischen den Flanschen 2, 12 und den hakenförmigen Fortsätzen 1, 11 mittels durch Bohrungen eingespritzter Dichtungsmasse ausgefüllt, wobei für die Bohrungen Bohrspurrillen vorgesehen sind. Auch der Spalt zwischen den hakenförmigen Fortsätzen wird durch von außen eingebrachte Dichtungsmasse ausgefüllt und durch einen gebogenen Metallkeil 5 verschlossen. Der Keil 5 weist gebogene Seitenwände auf, deren eine den Drehpunkt 4 als Kreismittelpunkt besitzt, wobei die andere Seite der Form der Spaltwand angepaßt ist. Zur besseren Halterung sind die Gegenflächen zu den Keilflächen mit einer widerhakenartigen Verzahnung ausgeführt. Der Keil kann in jeder Winkellage der Längsprofile 30 eingeführt werden, wobei nach Fertigstellung des Schiffskörpers vor dem Lackieren der vorstehende Teil durch Schleifen, Fräsen od. dgl. oberflächenbündig oder leicht vertieft abgetrennt wird.

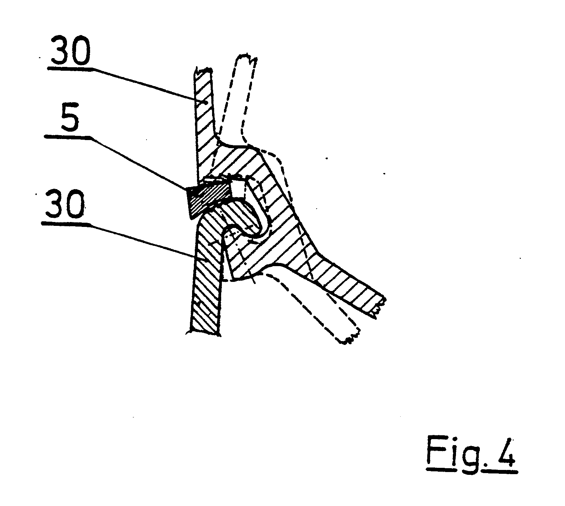

Wie aus Fig. 4 zu sehen ist, können mit dieser Verbindung auch negative Krümmungen der Schiffswand hergestellt werden, wobei der Spalt dazu dient, auch in jeder Richtung vorgebogene Längsprofile auf ihrer ganzen Länge ineinander zu fügen und in die richtige Winkellage zueinander zu bringen.

Zum Anschluß eines Decks, das aus ähnlich geformten Deckprofilen 33 aufgebaut wird, die jedoch nach oben stehende Rippen 35 aufweisen, die zum Einlegen von Teakholz-Deckplanken 36 dienen, werden Deckrandprofile 32 verwendet, welche den hakenförmigen Fuß-Fortsatz 11 bzw. den Fuß-Flansch 12, um 90° abgewinkelt, aufweisen und eine nach oben stehende Rippe 14 besitzen. Dichtung und Verbindung erfolgen wie bereits beim Schiffsrumpf vorher beschrieben. Zur besseren Verbindung der Deckplanken 36 werden diese in ein Klebebett 34 gelegt bzw. die Seitenflanken der Rippen 35 mit einer Verzahnung ausgestattet und/oder hinterschnitten ausgeführt. Die Montage des Decks erfolgt ebenfalls vom Deckrandprofil 32 ausgehend, gleichzeitig mit der Rumpfhalbschale.

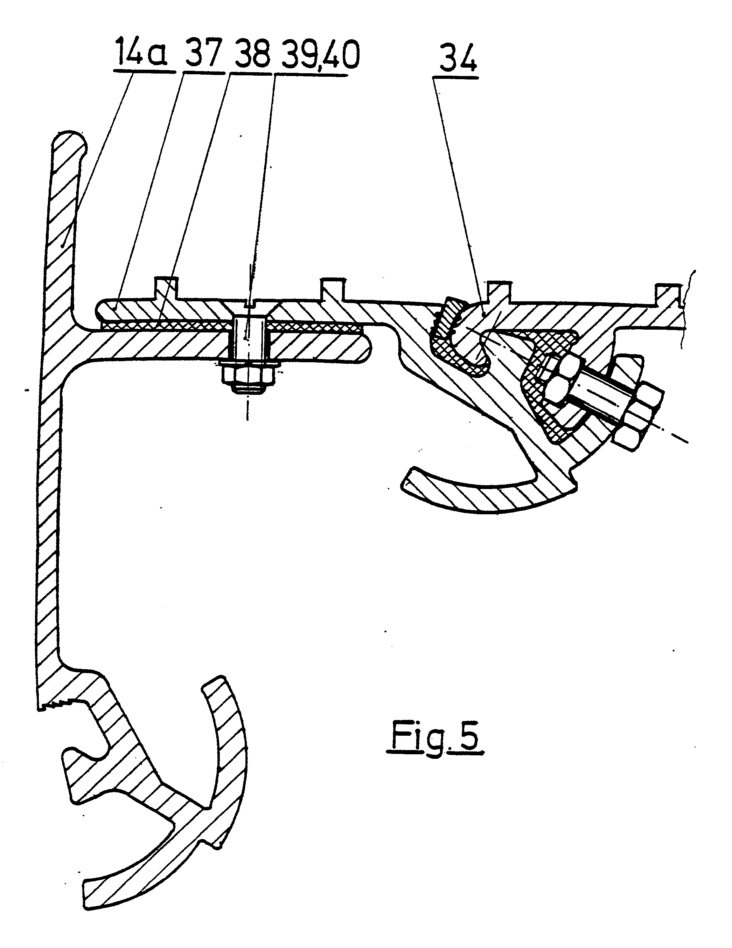

Es ist aber auch möglich, gemäß Fig. 5 das Deck auf einer Vorrichtung getrennt herzustellen und sodann mittels einer Flanschverschraubung mit dem Deckrandprofil zu verbinden, dabei ein Deckprofil bei 37 abzuschneiden und mittels der Schrauben 39, 40 und einer dazwischengelegten Dichtung 38 mit einem nach innen rechtwinkelig vorstehenden Flansch des Deckrandprofils zu verbinden, das ebenfalls eine nach oben stehende Rippe 14a aufweist.

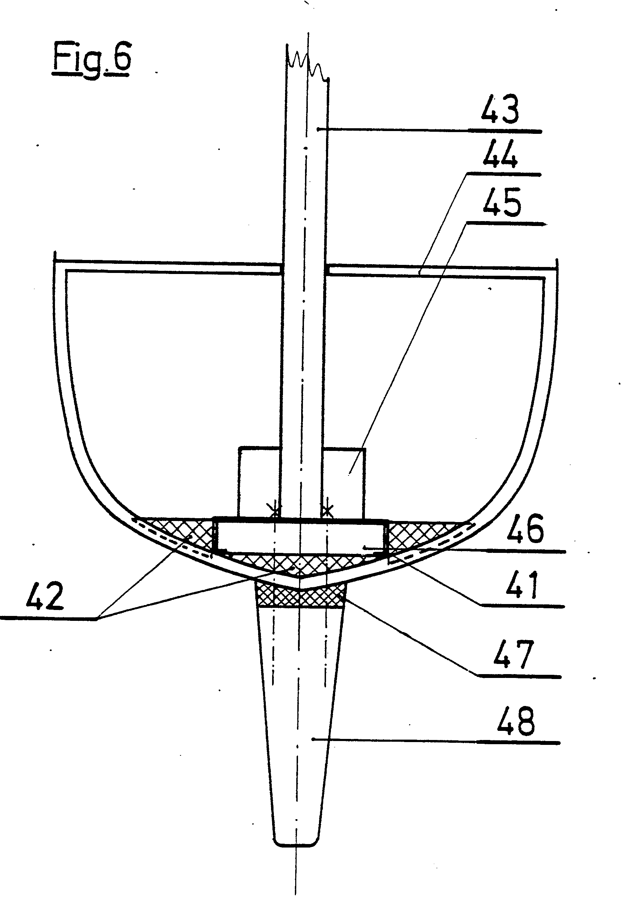

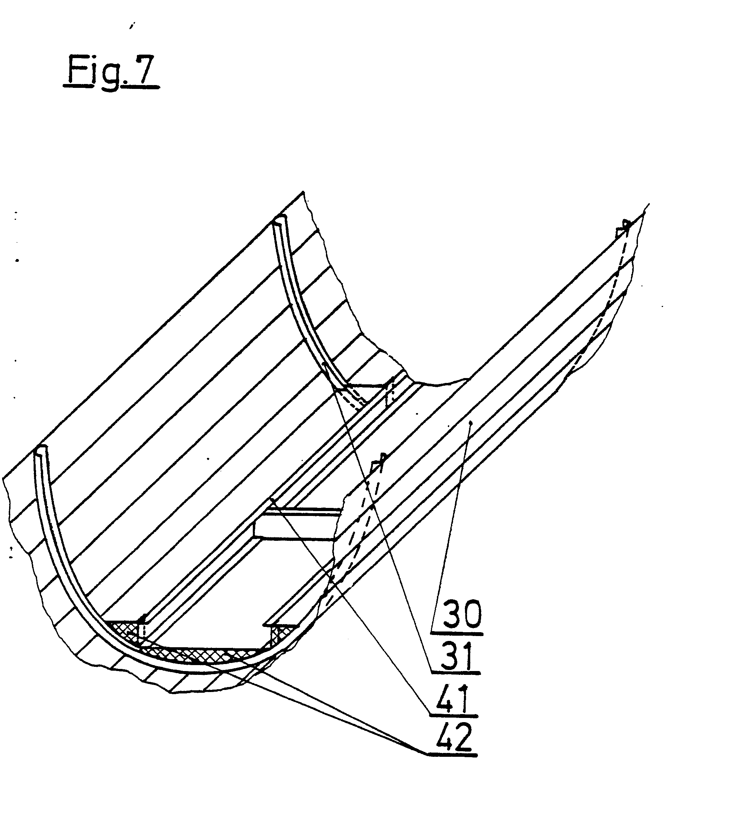

Um dem Schiffskörper die notwendige Steifigkeit zu geben und die Hauptkräfte, herrührend von einem Mast 43, Motorantrieb 45 und Kiel 48, auf den Schiffskörper gleichmäßig zu verteilen, wird im unteren Teil des Schiffskörpers gemäß Fig. 6 bzw. 7 ein U-Profilrahmen 41 eingebaut, an den alle diese Teile angeschlossen werden und der, mit den Querspanten 31 verbunden, diese Kräfte auf die Schiffsaußenhaut verteilt. Er bildet gleichzeitig eine Wanne 46 als Auffangwanne und ist seitwärts und unterhalb durch Ausschäumung 42 gegen den Schiffskörper abgedichtet. Auch zwischen Schiffskörper und Kiel 48 ist eine aus Kunststoff bestehende Zwischenlage 47 angeordnet, um elektrolytische Korrosion zwischen dem aus Schwermetall bestehenden Kiel 48 und dem aus Aluminium bestehenden Schiffskörper zu vermeiden.

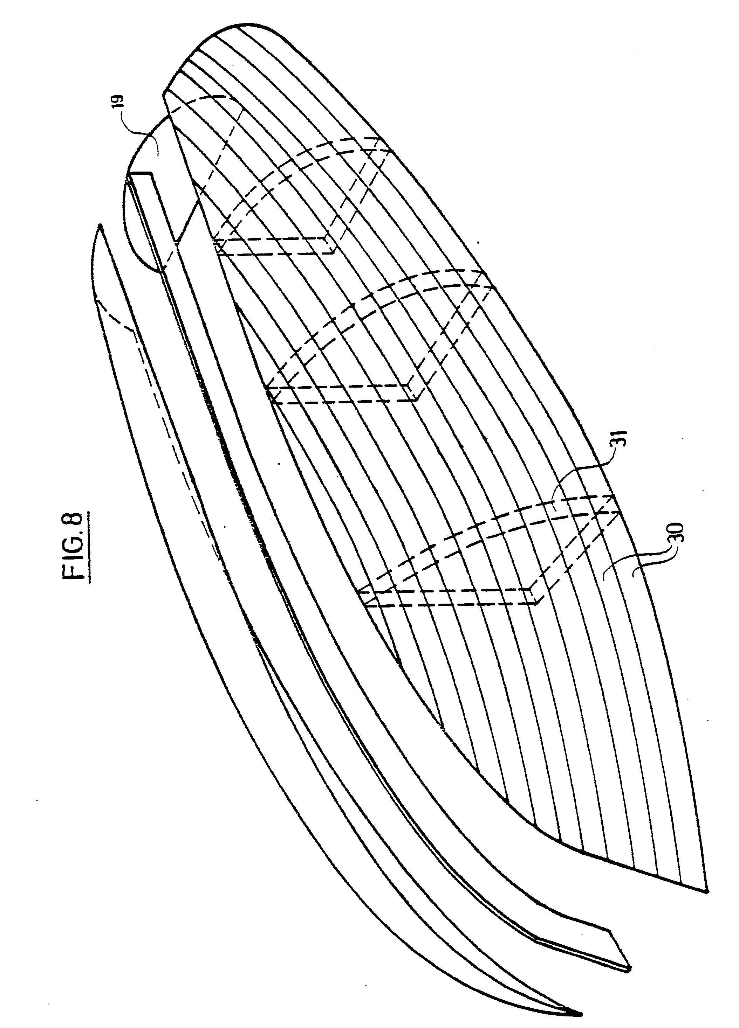

Wie man aus Fig. 8 erkennen kann, wird der Schiffskörper aus zwei Halbschalen hergestellt mit Hilfe einer mit den Querspanten verbundenen Tragkonstruktion, wobei die Längsprofile in der Schiffsmittelebene abgeschnitten und miteinander sowohl im Rumpf als auch im Deckbereich verschweißt werden.

Die Erfindung ist auf das beschriebene Ausführungsbeispiel nicht beschränkt, da die Längsprofile auch aus Kunststoff oder Stahl, insbesondere nichtrostendem Stahl, hergestellt sein können.

**Patentansprüche**

1. Hohlkörper, insbesondere Schiffskörper, mit räumlich gekrümmten Außenwänden aus über ihre Länge im Querschnitt gleichbleibenden, plankenartig zusammengesetzten und entsprechend vorgebogenen Metall- oder Kunststoff-Längsprofilen (30), deren an ihren Längsrändern ausgebildete Kopf-Fortsätze (1) und Fuß-Fortsätze (11) abgedichtet ineinandergreifen und jedem dieser Kopf- und Fuß-Fortsätze innenseitig ein Kopf- bzw. Fuß-Flansch (2, 12) so zugeordnet ist, daß die den ineinandergreifenden Fortsätzen (1, 11) zugehörigen Flansche (2, 12) aneinanderliegen und mittels einer Schraube (20, 21) miteinander verschraubbar sind, dadurch gekennzeichnet, daß die Kopf- und Fuß-Fortsätze (1, 11) hakenförmig ausgebildet sind und so ineinandergreifen, daß sie durch die Flanschverschraubung unter Zugbelastung gegeneinander gezogen werden, wobei die Hakennase des Fuß-Fortsatzes (11) des einen Längsprofiles in den Hakengrund des Kopf-Fortsatzes (1) des anderen Längsprofiles unter Linienberührung zu liegen kommt.

2. Hohlkörper nach Anspruch 1, dadurch gekennzeichnet, daß der Fuß-Flansch (12) an einem über den zugehörigen Fuß-Fortsatz (11) hinaus verlängerten Steg (10) vorgesehen ist und den Kopf-Flansch (2) des anliegenden Längsprofiles auf seiner dem Hakeneingriff abgekehrten Seite übergreift.

3. Hohlkörper nach Anspruch 1 oder 2, dadurch gekennzeichnet, daß sich der Kreismittelpunkt der gekrümmten Flansche (2, 12) im Drehpunkt (4) der Fortsätze (1, 11) befindet.

4. Hohlkörper nach einem der Ansprüche 1 bis 3, dadurch gekennzeichnet, daß ein zwischen den Kopf- und Fuß-Fortsätzen (1, 11) verbleibender Spalt durch eine dauerelastische Dichtungsmasse ausgefüllt und nach der Außenseite hin durch einen eingetriebenen Keil (5) verschlossen ist.

5. Hohlkörper nach Anspruch 4, dadurch gekennzeichnet, daß der Keil (5), im Querschnitt gesehen, gekrümmt ist, mindestens an einer seiner Seitenflächen einen Kreisradius mit dem Mittelpunkt im Drehpunkt (4) der Fortsätze (1, 11) aufweist und die andere Keilseite winkelmäßig der gegenüberliegenden Spaltseite angepaßt ist, wobei die mit diesem Keil in Berührung kommenden Gegenflächen der Fortsätze (1, 11) mit einer widerhakenartigen Verzahnung (15) versehen sind (Fig. 4).

6. Hohlkörper nach einem der Ansprüche 1 bis 5, dadurch gekennzeichnet, daß der Raum (7) zwischen dem Hakeneingriff der Fortsätze (1, 11) und den Flanschen (2, 12) mittels einer Dichtungsmasse ausgefüllt ist.

7. Hohlkörper nach einem der Ansprüche 1 bis 6, dadurch gekennzeichnet, daß an einem Steg (10) des Fuß-Flansches (12) ein weiterer, in entgegengesetzte Richtung weisender Trag-Flansch (13) zur Verschraubung mit einem Querspanten (31) ausgebildet ist.

8. Hohlkörper nach Anspruch 7, dadurch gekennzeichnet, daß für eine Verschraubung in jeder Winkellage der Trag-Flansch (13) kreisförmig gebogen ist und die Querspanten (31) U-förmigen Querschnitt mit einem halbkreisförmigen Steg aufweisen (Fig. 3).

9. Hohlkörper nach Anspruch 8, dadurch gekennzeichnet, daß die Schenkelenden der Querspanten (31) nach innen verstärkt ausgebildet sind, um Querschoten anschließen zu können.

10. Schiffskörper aus einem Hohlkörper gemäß einem der Ansprüche 1 bis 9 sowie mit einem die Hohlkörper-Seitenwände verbindenden Deck, dadurch gekennzeichnet, daß das Deck aus gleichartigen ineinandergreifenden Deckprofilen (33) zusammengesetzt ist, die an ihrer Außenseite Rippen (35) zur Befestigung von Kunststoff- oder Holz-Deckplanken (36) aufweisen (Fig. 2).

11. Schiffskörper nach Anspruch 10, dadurch gekennzeichnet, daß die Deckprofile (33) mit Kopf- und Fuß-Fortsätzen (1, 11) sowie mit Kopf- und Fuß-Flanschen (2, 12) ausgestattet sind.

12. Schiffskörper nach Anspruch 1, dadurch gekennzeichnet, daß zum Einhaken der Deckprofile (33) an den Seitenwänden die die Seitenwände oben abschließenden Deckrandprofile (32) auf ihrer Innenseite einen zu den Deckprofilen (33) gerichteten Fuß-Fortsatz (11) mit Fuß-Flansch (12) bzw. Kopf-Fortsatz (1) mit Kopf-Flansch (2) aufweisen und der Profilsteg eine über den Fortsatz (11, 1) hochstehende Rippe (14) bildet (Fig. 2).

13. Schiffskörper nach Anspruch 10 oder 11, dadurch gekennzeichnet, daß das Deckrandprofil (33) einen nach oben verlängerten Steg (14a) und eine im rechten Winkel davon abstehende gerade Flanschrippe zum Anschluß eines Deckprofiles mit auslaufendem Profilsteg (37) aufweist (Fig. 5).

14. Schiffskörper nach einem der Ansprüche 10 bis 13, dadurch gekennzeichnet, daß er mindestens eine möglichst tiefliegende, weitgehend waagrecht angeordnete und mit den Querspanten verbundene Tragkonstruktion in Form eines U-Profilrahmens (41) aufweist, der die wesentlichen vom Mast (43), Motor (45) und Kiel (48) herrührenden Kräfte aufnimmt und einzeln oder gemeinsam über die Querspanten (31) möglichst gleichmäßig auf die Außenhaut verteilt.

**Claims**

1. Hollow body, especially a ship's hull, having spacially curved outer walls consisting of longitudinal metal or plastic sections (30) of constant cross-section along their lengths, being assembled plank-like and correspondingly prebent, whose top extensions (1) and bottom extensions (11) formed at their longitudinal margins impermeably interlock, the respective top or bottom flange (2, 12) being allocated to each of these top and bottom extensions inside in such a way that the flanges (2, 12) which belong to the interlocking extensions (1, 11) abut and can be bolted with each other by means of a screw (20, 21), characterized in that the top and bottom extensions (1, 11) have the form of hooks and interlock in such a way that they are drawn towards each other by the screw connection of the flanges under tensile load, the hook nose of the bottom extension (11) of the one longitudinal section coming to lie in the hook bottom of the top extension (1) of the other longitudinal section with their lines contacting.

2. Hollow body according to claim 1, characterized in that the bottom flange (12) is provided at a web (10) prolonged beyond the respective bottom extension (11) and overlaps the top flange (2) of the abutting longitudinal section at that side which is turned away from the hooks' mesh.

3. Hollow body according to claim 1 or 2, characterized in that the centre of the circle of the curved flanges (2, 12) coincides with the centre (4) of rotation of the extensions (1, 11).

4. Hollow body according to one of the claims 1 to 3, characterized in that a gap remaining between the top extensions and the bottom extensions (1, 11) is filled with a permanently elastic sealing bulk and is closed towards the outer side by a forced-in key (5).

5. Hollow body according to claim 4, characterized in that the key (5), in cross-sectional view, is curved, has at least at one of its lateral faces a circular radius whose centre coincides with the centre (4) of rotation of the extensions (1, 11) and the inclination of the other side of the key is adapted to that of the opposed side of the gap, the opposed faces of the extensions (1, 11) which come into contact with said key having a barb-like toothing (15) (fig. 4).

6. Hollow body according to one of the claims 1 to 5, characterized in that the space (7) between the hooks' mesh of the extensions (1, 11) and the flanges (2, 12) is filled with a sealing bulk.

7. Hollow body according to one of the claims 1 to 6, characterized in that a further supporting flange (13) which is directed to the opposite direction is provided at a web (10) of the bottom flange (12) for being bolted to a transverse frame (31).

8. Hollow body according to claim 7, characterized in that the supporting flange (13) is bent circularly for being bolted in every angular position and the transverse frames (31) have a U-shaped cross-section with a semi-circular web (fig. 3).

9. Hollow body according to claim 8, characterized in that the ends of the legs of the transverse frames (31) are thickened towards inside so that transverse bulkheads can be connected.

10. Ship's hull consisting of a hollow body according to one of the claims 1 to 9 and of a deck connecting the lateral walls of the hollow body, characterized in that the deck is composed of identical interlocking deck sections (33) which have ribs (35) at their outer side for mounting plastic or wooden deck planks (36) (fig. 2).

11. Ship's hull according to claim 10, characterized in that the deck sections (33) have top and bottom extensions (1, 11) and top and bottom flanges (2, 12).

12. Ship's hull according to claim 11, characterized in that for hooking the sections (33) of the deck into the lateral walls the marginal sections (32) of the deck marking the upper limitation of the side walls have at their inner sides a bottom extension (11) directed towards the sections (33) of the deck with a bottom flange (12) or a top extension (1) with a top flange (2) and the web of the section forms a rib (14) projecting beyond the extension (11, 1) (fig. 2).

13. Ship's hull according to claim 10 or 11, characterized in that the marginal section (33) of the deck has a web (14a) being prolonged upwards and a straight flange rib protruding rectangularly from said web for the connection of a deck section having an end web (37) (fig. 5).

14. Ship's hull according to one of the claims 10 to 13, characterized in that it has at least one supporting structure which has the form of a channel section frame (41), is situated as low as possible, arranged horizontally to a great extent, connected with the transverse frame (31), takes up the forces developed by the mast (43), the motor (45) and the keel (48) and distributes the forces individually or commonly via the transverse frames (31) over the shell as equally as possible.

## Revendications

1. Corps creux, en particulier coque de navire, présentant des parois externes courbées dans l'espace et constituées par des profilés longitudinaux (30) en métal ou en matière plastique de section constante sur leur longueur, assemblés pour former un bordage et cintrés préalablement de manière correspondante, et dont les appendices de tête (1) et les appendices de base (11) façonnés sur leurs bords longitudinaux s'imbriquent les uns dans les autres de manière étanche, une aile respective de tête ou de base (2, 12) étant associée intérieurement, à chacun de ces appendices de tête et de base, de telle sorte que les ailes (2, 12) appartenant aux appendices enchevêtrés (1, 11) portent les unes contre les autres et puissent être solidarisées par vissage au moyen d'un boulon (20, 21), corps caractérisé par le fait que les appendices de tête et de base (1, 11) sont réalisés en forme d'ardillons et s'interpénètrent de façon qu'ils soient tirés les uns contre les autres avec effort de traction par la solidarisation vissée desdites ailes, le bec du crochet de l'appendice de base (11) de l'un des profilés longitudinaux venant alors se placer, avec contact linéaire, dans le fond du crochet de l'appendice de tête (1) de l'autre profilé longitudinal.

2. Corps creux selon la revendication 1, caractérisé par le fait que l'aile de base (12) est prévue sur une âme (10) prolongée au-delà de l'appendice de base associé (11), et coiffe l'aile de tête (2) du profilé longitudinal attenant, sur son côté tourné à l'opposé de la prise d'accrochage.

3. Corps creux selon la revendication 1 ou 2, caractérisé par le fait que le centre du cercle formé par des ailes courbes (2, 12) coïncide avec le point de rotation (4) des appendices (1, 11).

4. Corps creux selon l'une des revendications 1 à 3, caractérisé par le fait qu'un interstice subsistant entre les appendices de tête et de base (1, 11) est comblé par une masse d'étanchement à élasticité permanente, et est obturé vers la face externe par l'intermédiaire d'un coin (5) emmanché à force.

5. Corps creux selon la revendication 4, caractérisé par le fait que le coin (5) est curviligne observé en coupe et présente, sur au moins l'une de ses faces latérales, un rayon de circonférence dont le centre coïncide avec le point (4) de rotation des appendices (1, 11), l'inclinaison de l'autre côté de ce coin étant adaptée à la face opposée de l'interstice, les surfaces complémentaires des appendices (1, 11) venant en contact avec ce coin étant pourvues d'une denture (15) du type lame de scie (figure 4).

6. Corps creux selon l'une des revendications 1 à 5, caractérisé par le fait que l'espace (7) situé entre la prise d'accrochage des appendices (1, 11) et des ailes (2, 12) est comblé au moyen d'une masse d'étanchement.

7. Corps creux selon l'une des revendications 1 à 6, caractérisé par le fait qu'une aile (13) supplémentaire de support, tournée dans la direction opposée, est ménagée, sur une âme (10) de l'aile de base (12), en vue de la solidarisation par vissage avec un couple transversal (31).

8. Corps creux selon la revendication 7, caractérisé par le fait que, pour permettre une solidarisation par vissage dans toute position angulaire, l'aile (13) de support est cintrée en arc de cercle et les couples transversaux (31) accusent une section en U à âme semi-circulaire (figure 3).

9. Corps creux selon la revendication 8, caractérisé par le fait que les extrémités des branches des couples transversaux (31) sont réalisées épaissies vers l'intérieur, pour pouvoir raccorder des cloisons transversales.

10. Coque de navire consistant en un corps creux selon l'une des revendications 1 à 9, ainsi qu'en un pont reliant les parois latérales de ce corps creux, caractérisée par le fait que le pont se compose de profilés (33) de pont, identiques, qui s'imbriquent les uns dans les autres et présentent, à leur face externe, des nervures (35) en vue de la fixation de madriers de pont (36) en matière plastique ou en bois (figure 2).

11. Coque de navire selon la revendication 10, caractérisée par le fait que les profilés (33) de pont sont dotés d'appendices de tête et de base (1, 11), ainsi que d'ailes de tête et de base (2, 12).

12. Coque de navire selon la revendication 11, caractérisée par le fait que, en vue de l'accrochage des profilés (33) de pont aux parois latérales, les profilés marginaux (32) du pont, qui marquent la délimitation supérieure desdites parois latérales, présentent à leur face interne, en direction des profilés (33) de pont, un appendice de base (11) muni d'une aile de base (12) ou respectivement un appendice de tête (1) pourvu d'une aile de tête (2), l'âme de ces profilés formant une nervure (14) saillant au-delà dudit appendice (11, 1) (figure 2).

13. Coque de navire selon la revendication 10 ou 11, caractérisée par le fait que le profilé marginal (33) de pont présente une nervure (14a) prolongée vers le haut, ainsi qu'une nervure d'aile rectiligne qui fait saillie à angle droit au-delà de cette âme, en vue du raccordement d'un profilé de pont muni d'une âme d'extrémité (37) (figure 5).

14. Coque de navire selon l'une des revendications 10 à 13, caractérisée par le fait qu'elle comporte au moins une structure de support qui occupe une position la plus basse possible, est disposée dans une large mesure horizontalement, est reliée aux couples transversaux et se présente sous la forme d'un cadre (41) profilé en U, qui absorbe les forces principales provenant du mât (43), du moteur (45) et de la quille (48), puis les répartit le plus uniformément possible sur l'enveloppe externe, individuellement ou conjointement par l'intermédiaire des couples transversaux (31).

0 119 398

Fig. 1

30
10
15
5
1
4
11
7
12
2021
30

140

13
22 23
31

3
6
2

1

## Fig. 2

14  35  36  33  34

32

13

11

12

Fig. 3

31
22 23
13
11

30

5

30

Fig. 4

Fig.5

## Fig.6

43
44
45
46
41
42
47
48

# Fig.7

30
31
41
42

# FIG.8

19

31

30

0 119 398

8